(19) Europäisches Patentamt
European Patent Office
Office européen des brevets

(11) **EP 4 343 690 A1**

(12) **EUROPEAN PATENT APPLICATION**
published in accordance with Art. 153(4) EPC

(43) Date of publication:
**27.03.2024 Bulletin 2024/13**

(21) Application number: **22804698.3**

(22) Date of filing: **17.05.2022**

(51) International Patent Classification (IPC):
**G06T 7/00** (2017.01)         **G06T 1/00** (2006.01)
**G06N 20/00** (2019.01)

(52) Cooperative Patent Classification (CPC):
**G06N 20/00; G06T 1/00; G06T 7/00**

(86) International application number:
**PCT/JP2022/020593**

(87) International publication number:
**WO 2022/244787 (24.11.2022 Gazette 2022/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.05.2021 JP 2021084954**

(71) Applicant: **Kyocera Corporation
Kyoto-shi
Kyoto 612-8501 (JP)**

(72) Inventors:
• **KIM, Jaechul
Kyoto-shi, Kyoto 612-8501 (JP)**
• **DAI ,Xiaoyan
Kyoto-shi, Kyoto 612-8501 (JP)**

(74) Representative: **Viering, Jentschura & Partner
mbB
Patent- und Rechtsanwälte
Am Brauhaus 8
01099 Dresden (DE)**

(54) **INFORMATION PROCESSING METHOD, PROGRAM, AND INFORMATION PROCESSING DEVICE**

(57)     An information processing method includes acquiring an evaluation result that indicates whether an estimation result of a learning model for a first evaluation image is correct or incorrect based on first evaluation data including data of at least one first evaluation image and correct answer data for the first evaluation image. The information processing method includes executing identification processing in which a feature of an image that is likely to cause the estimation result of the learning model to be incorrect is identified based on the evaluation result.

FIG. 7

**Description**

CROSS-REFERENCE TO RELATED APPLICATIONS

This application claims priority from Japanese Patent Application No. 2021-084954 filed in Japan on May 19, 2021, and the entire disclosure of this application is hereby incorporated by reference.

TECHNICAL FIELD

The present disclosure relates to an information processing method, a program, and an information processing device.

BACKGROUND OF INVENTION

In recent years, development of technologies for recognizing objects contained in images using machine learning has been progressing. In such technologies, a large amount of image data is required as learning data used when training a model. Accordingly, technologies for generating learning data have been developed.

For example, Patent Literature 1 describes generating multiple learning composite images containing one or multiple products by randomly disposing individual images. Patent Literature 1 describes that the generated multiple learning composite images include learning composite images in which the individual images at least partially overlap each other.

For example, Patent Literature 2 describes creating a combined image that serves as teacher data in machine learning by combining a background image and a patch image of a target object based on a probability set in a created target object existence probability map.

CITATION LIST

PATENT LITERATURE

Patent Literature 1: Japanese Unexamined Patent Application Publication No. 2020-80003
Patent Literature 2: Japanese Unexamined Patent Application Publication No. 2018-88223

SUMMARY

PROBLEM TO BE SOLVED

In an embodiment of the present disclosure, an information processing method includes:

acquiring an evaluation result that indicates whether an estimation result of a learning model for a first evaluation image is correct or incorrect based on first evaluation data including data of at least one first evaluation image and correct answer data for the first evaluation image, and
executing identification processing in which a feature of an image that is likely to cause the estimation result of the learning model to be incorrect is identified based on the evaluation result.

In an embodiment of the present disclosure, a program causes a computer to execute:

acquiring an evaluation result that indicates whether an estimation result of a learning model for a first evaluation image is correct or incorrect based on first evaluation data including data of at least one first evaluation image and correct answer data for the first evaluation image, and
executing identification processing in which a feature of an image that is likely to cause the estimation result of the learning model to be incorrect is identified based on the evaluation result.

In an embodiment of the present disclosure, an information processing device includes a controller.
The controller is configured to acquire an evaluation result indicating whether an estimation result of a learning model for a first evaluation image is correct or incorrect based on first evaluation data including data of at least one first evaluation image and correct answer data for the first evaluation image.

The controller executes identification processing in which a feature of an image that is likely to cause the estimation result of the learning model to be incorrect is identified based on the evaluation result.

BRIEF DESCRIPTION OF THE DRAWINGS

FIG. 1 is a diagram illustrating an outline configuration of a payment system according to an embodiment of the present disclosure.
FIG. 2 is an external view illustrating the configuration of an information processing system illustrated in FIG. 1.
FIG. 3 is a functional block diagram illustrating the configuration of the information processing device illustrated in FIG. 2.
FIG. 4 is a diagram illustrating an example of a first evaluation image according to an embodiment of the present disclosure.
FIG. 5 is a diagram illustrating an example of setting of parameters according to an embodiment of the present disclosure.
FIG. 6 is a diagram illustrating another example of setting of parameters according to an embodiment of the present disclosure.
FIG. 7 is a flowchart illustrating operation of learning support processing executed by the information processing system illustrated in FIG. 1.
FIG. 8 is a diagram illustrating another example of a first evaluation image according to an embodiment of the present disclosure.

DESCRIPTION OF EMBODIMENTS

There is room for improvement in existing technologies. For example, if image features that are likely to result in inaccurate estimation of a learning model can be identified, learning data can be generated more efficiently. According to the present disclosure, an improved technology that supports learning can be provided.
Embodiments of the present disclosure are described below while referring to the drawings. In the components illustrated in the drawings below, the same symbols are used for the same components.

(Configuration of System)

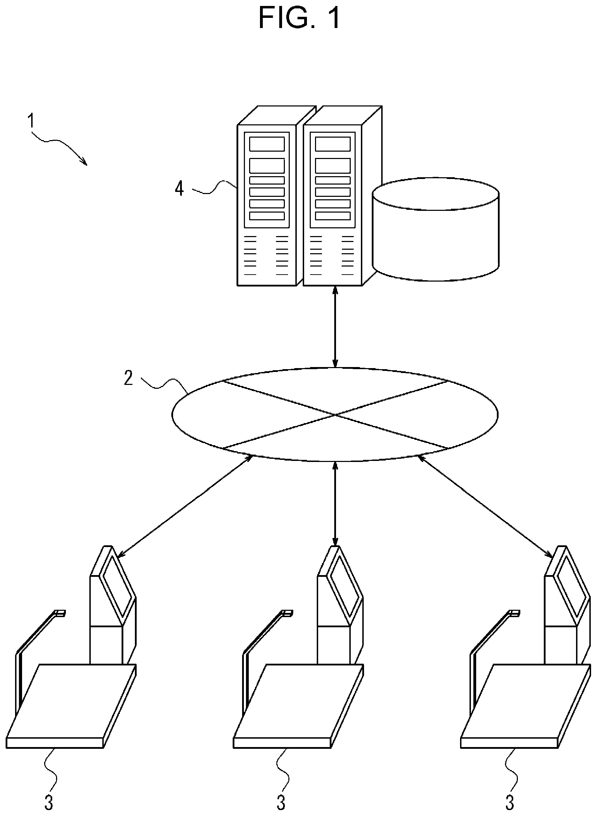

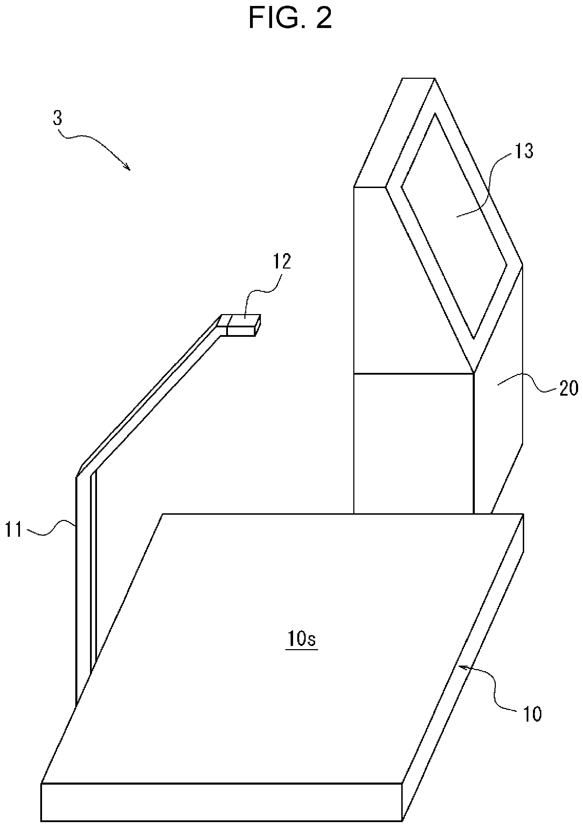

A payment system 1 illustrated in FIG. 1 is configured as a point of sales (POS) system. The payment system 1 includes at least one information processing system 3 and a server 4. In this embodiment, the payment system 1 includes a plurality of information processing systems 3.
The information processing systems 3 and the server 4 are able to communicate with each other via a network 2. The network 2 may be any suitable network including the Internet.
The information processing systems 3 may be installed in any store. The store where the information processing systems 3 are installed is, for example, a shop or a restaurant.
Each information processing system 3 is configured as a cash register terminal of a POS system. The information processing system 3 captures an image of a product placed on the cash register terminal by a customer. The information processing system 3 performs object recognition on the captured and generated image and estimates what product an object contained in the image is in the store. In the present disclosure, "an object contained in an image" means an object drawn in an image. In the present disclosure, the portion of the image that is drawn as an object, i.e., the portion of the image where the object is drawn, is also referred to as an "object image". A billing amount that the customer is to be charged can be calculated by the information processing system 3 estimating what product object placed thereon is in the store. The information processing system 3 transmits the estimation result, which indicates what product the placed object is in the store, to the server 4 via the network 2.
The server 4 receives, from the information processing system 3 via network 2, the estimation result indicating what product the placed object is in the store. Based on the estimation result, the server 4 manages the inventory status and so on of the store where the information processing system 3 is installed.
As illustrated in FIG. 2, each information processing system 3 includes an image-capturing unit 12 and an information processing device 20. The information processing system 3 may further include a placement table 10, a support column 11, and a display device 13.
The placement table 10 includes an upper surface 10s. At checkout, a customer places a product that they wish to buy on the upper surface 10s. In this embodiment, the upper surface 10s has a substantially rectangular shape. However, the upper surface 10S may have any suitable shape.

The support column 11 supports the image-capturing unit 12. The support column 11 extends from the side of the placement table 10 to the region above the upper surface 10s.

The image-capturing unit 12 generates an image signal corresponding to an image by performing image capturing. The image-capturing unit 12 is fixed in place so as to able to capture an image of at least part of the surface of the placement table 10. The image-capturing unit 12 may be fixed in place so that the optical axis thereof is perpendicular to the upper surface 10s. For example, the image-capturing unit 12 is fixed to a leading end of the support column 11 so as to be able to capture images of the entire upper surface 10s of the placement table 10 and the optical axis of the image-capturing unit 12 is perpendicular to the upper surface 10s. The image-capturing unit 12 may continually perform image capturing at a suitably chosen frame rate.

The display device 13 may be any suitable type of display. The display device 13 displays an image corresponding to an image signal transmitted from the information processing device 20. The display device 13 may function as a touch screen.

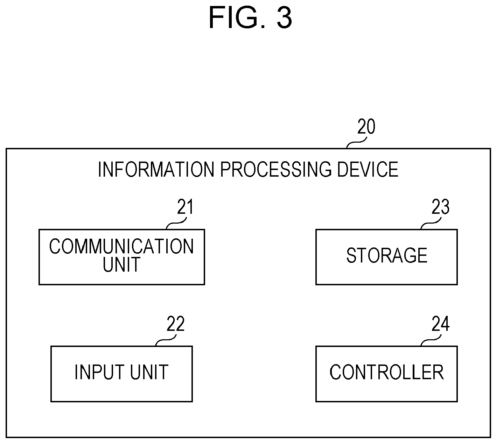

As illustrated in FIG. 3, the information processing device 20 includes a communication unit 21, an input unit 22, a storage 23, and a controller 24. In this embodiment, the information processing device 20 is configured as a separate device from the image-capturing unit 12 and the display device 13. However, the information processing device 20 may be configured so as to be integrated with, for example, at least any one out of the image-capturing unit 12, the support column 11, the placement table 10, and the display device 13.

The communication unit 21 includes at least one communication module that can connect to the network 2. The communication module is, for example, a communication module that is compatible with standards such as wired local area network (LAN) or wireless LAN. The communication unit 21 is connected to the network 2 via wired LAN or wireless LAN using the communication module.

The communication unit 21 includes a communication module capable of communicating with the image-capturing unit 12 and the display device 13 via communication lines. The communication module is a communication module that is compatible with the communication standard of the communication lines. The communication lines include at least one out of wired and wireless communication lines.

The input unit 22 is capable of receiving input from a user. The input unit 22 includes at least one input interface capable of receiving input from a user. The input interface takes the form of, for example, physical keys, capacitive keys, a pointing device, or a touch screen or a microphone integrated with the display. In this embodiment, the input unit 22 is a touch screen integrated with the display device 13.

The storage 23 includes at least one semiconductor memory, at least one magnetic memory, at least one optical memory, or a combination of at least two of these types of memories. A semiconductor memory is, for example, a random access memory (RAM) or a read only memory (ROM). A RAM is for example, a static random access memory (SRAM) or a dynamic random access memory (DRAM). A ROM is, for example, an electrically erasable programmable read only memory (EEPROM). The storage 23 may function as a main storage device, a auxiliary storage device, or a cache memory. The storage 23 stores data used in operation of the information processing device 20 and data obtained by operation of the information processing device 20. For example, the storage 23 stores system programs, application programs, and embedded software. For example, the storage 23 stores a learning model.

The controller 24 includes at least one processor, at least one dedicated circuit, or a combination thereof. The processor can be a general-purpose processor such as a central processing unit (CPU) or a graphics processing unit (GPU), or a dedicated processor specialized for particular processing. A dedicated circuit is, for example, a field-programmable gate array (FPGA) or an application specific integrated circuit (ASIC). The controller 24 executes processing relating to operation of the information processing device 20 while controlling the various parts of the information processing device 20.

[Checkout Processing]

The controller 24 receives an image signal from the image-capturing unit 12 via the communication unit 21. The controller 24 receives the image signal, and acquires an image corresponding to the image signal. The controller 24 acquires an estimation result indicating what product an object contained in the image is in the store by performing object recognition using a learning model. The learning model is generated by machine learning, such as deep learning, so as to output an estimation result when input with image data. The learning model may assign a degree of confidence to the estimation result. Degree of confidence is an indicator of confidence in the estimation result. The higher the degree of confidence, the higher the confidence in the estimation result. The controller 24 inputs the image data to the learning model and acquires the estimation result output from the learning model. The controller 24 calculates a billing amount to be charged to the customer based on the acquired estimation result. The controller 24 transmits a signal representing information of the billing amount to the display device 13 using the communication unit 21 and causes the information of the billing amount to be displayed on the display device 13

[Identification Processing]

The controller 24 identifies weaknesses of the learning model in object recognition at any suitable timing, such as before or after operation of the information processing device 20. By identifying weaknesses of the learning model in object recognition, the learning model can be efficiently retrained or trained. The controller 24 executes identification processing in order to identify features of an image that are likely to result in estimation results of the learning model being incorrect as identification of weaknesses of the learning model in object recognition. Hereafter, an example of this processing will be described.

The controller 24 generates first evaluation data. The first evaluation data includes data of at least one first evaluation image and correct answer data corresponding to the first evaluation image. The correct answer data is, for example, data indicating what product an object in the first evaluation image is in the store. The first evaluation data may include data of multiple first evaluation images and correct answer data respectively corresponding to the first evaluation images.

The controller 24 sets parameters and generates at least one first evaluation image based on the set parameters. The controller 24 may generate multiple first evaluation images. The parameters are for setting elements that make up an image. The parameters correspond to the difficulty level of estimating objects in the image. The controller 24 sets the difficulty level by setting the parameters. The controller 24 may set the parameters based on the amount of learning data that the learning model has already learned. For example, the controller 24 sets the parameters so that the greater the amount of learning data that the learning model has already learned, the higher the difficulty level. When the controller 24 executes learning processing in curriculum learning and the identification processing in parallel, as described later, the controller 24 may generate a first evaluation image based on parameters set in first processing.

Various parameters may be employed. The parameters may be set as appropriate in accordance with what parameters are employed. For example, setting a parameter may be setting the parameter to a set value such as an integer or setting the parameter to a level. The parameters may include at least any of parameters set for objects in the images and parameters set for the environment of the objects in the images. Any combination of multiple parameters may be employed. For example, the parameters may include the following parameters.

The number of objects that are to be detected in an image may be employed as a parameter. The objects that are to be detected are, for example, products in a store. The smaller the number of objects to be detected, the lower the difficulty level of estimating the objects in the image. The higher the number of objects to be detected, the higher the difficulty level of estimating the objects in the image.

The number of objects that are not objects to be detected may be employed as a parameter. Objects that are not to be detected are, for example, objects other than products in the store. For example, objects that are not to be detected include the customer's fingers, a mobile phone, and keys. The smaller the number of objects that are not to be detected, the lower the difficulty level of estimating the objects in the image. The higher the number of objects that are not to be detected, the higher the difficulty level of estimating the objects in the image.

The degree of reflected light may be employed as a parameter. Reflected light is one parameter set for an object in an image. The lower the degree of reflected light, the lower the difficulty level of estimating the object for which the reflected light has been set. The higher the degree of reflected light, the higher the difficulty level of estimating the object for which the reflected light has been set.

An overlapping ratio may be employed as a parameter. Overlapping ratio is one parameter set for an object in an image The overlapping ratio may be set for two or more objects in an image. The overlapping ratio represents the degree of overlap between two or more object images in an image. The lower the overlapping ratio, the lower the difficulty level of estimating the object for which the overlapping ratio has been set. The higher the overlapping ratio, the higher the difficulty level of estimating the object for which the overlapping ratio has been set.

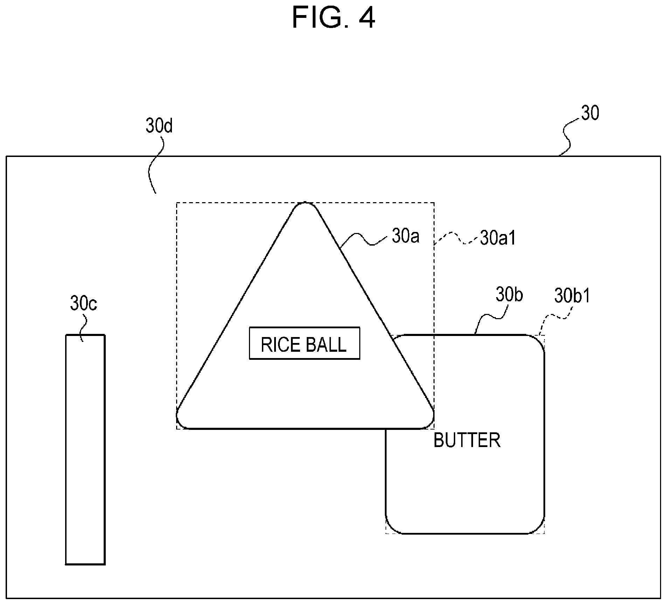

As an example, the overlapping ratio may be the ratio of the area of the part of a lower object image overlapping an upper object image to the area of the lower object image for two or more overlapping upper and lower object images in an image. In this case, for two overlapping object images 30a and 30b as illustrated in FIG. 4 described below, the overlapping ratio is the ratio of the area of the part of the object image 30b overlapping the object image 30a to the area of the object image 30b.

As another example, the overlapping ratio may be the area of the part of a detection frame of a lower object image overlapping the detection frame of an upper object image to the area of the detection frame of the lower object image for two or more overlapping upper and lower object images in an image. In this case, for the two overlapping object images 30a and 30b as illustrated in FIG. 4 described below, the overlapping ratio is the ratio of the area of the part of the detection frame 30b 1 overlapping a detection frame 30a1 to the area of a detection frame 30b1. The detection frame 30a1 is the detection frame of the object image 30a. The detection frame 30b1 is the detection frame of the object image 30b.

The hue of a background image may be employed as a parameter. The hue of the background image is one parameter set for the environment of an object in an image. The further the hue of the background image is from the hue of the object, the lower the difficulty level of estimating the object in the image. The closer the hue of the background image is to the hue of the object, the higher the difficulty level of estimating the object in the image.

The pattern of a background image may be employed as a parameter. The pattern of the background image is one parameter set for the environment of an object in an image. The simpler the pattern of the background image, the lower the difficulty level of estimating the object in the image. The more complex the pattern of the background image, the higher the difficulty level of estimating the object in the image.

The hue of illumination light may be employed as a parameter. The hue of illumination light is one parameter set for the environment of an object in an image. The closer the hue of the illumination light is to a white or warm hue, the lower the difficulty level of estimating the object in the image. The further the hue of the illumination light is from a white or warm hue, the higher the difficulty level of estimating the object in the image.

Luminance of illumination light may be employed as a parameter. The luminance of illumination light is one parameter set for the environment of an object in an image. The further the luminance of the illumination light is from a set range, the higher the difficulty level of estimating the object in the image. The set range may be set as appropriate based on the bandwidth of electromagnetic waves that can be captured by the image-capturing unit 12.

Hereafter, an example of processing for generating a first evaluation image based on set parameters will be described. For example, the controller 24 generates a first evaluation image by adjusting object images, a background image, and so on based on set parameters. The controller 24 may generate a first evaluation image by using a cut-and-paste method on existing images. A cut-and-paste method is a method in which an image is generated by cutting an object image from an existing image and pasting the object image onto a background image or another image. Images including object images may be used as existing images. An object image included in an existing image may be labeled with a label indicating what the object corresponding to the object image is. The controller 24, for example, cuts object images from existing images in accordance with their labels. The controller 24 generates a first evaluation image by adjusting object images, a background image, and so on based on the parameters while pasting the cut-out object images onto the background image.

For example, the controller 24 generates a first evaluation image 30 as illustrated in FIG. 4. The first evaluation image 30 includes an object image 30a corresponding to a rice ball, an object image 30b corresponding to butter, an object image 30c corresponding to chocolate, and a background image 30d. Rice balls, butter, and chocolate are store products, i.e., objects that are to be detected. In this example, the number of objects that are to be detected, an overlapping ratio, and luminance of illumination light are employed as parameters.

In FIG. 4, as a parameter, the controller 24 sets the number of objects to be detected to three. The controller 24 randomly determines each of the three objects to be detected to be a rice ball, butter, and chocolate.

In FIG. 4, the controller 24 sets the overlapping ratio as a parameter to 40%. The controller 24 randomly determines the two objects for which the overlapping ratio of 40% is set to be a rice ball and butter. In setting the overlapping ratio, the controller 24 determines that the object image 30b is on the bottom out of the object image 30a and the object image 30b.

In FIG. 4, the controller 24 sets the luminance of illumination light as a parameter as hard. Setting the luminance of illumination light to hard indicates that the luminance of illumination light is higher than the set range.

In FIG. 4, the controller 24 generates the first evaluation image 30 by using a cut-and-paste method. For example, the controller 24 cuts each of the object images 30a, 30b, and 30c out of different existing images or out of the same existing image. The controller 24 pastes each of the cut out object images 30a, 30b, and 30c onto the background image 30d. At this time, the controller 24 adjusts the overlapping ratio between the object image 30a and the object image 30b to 40%.

The controller 24 acquires evaluation results of the learning model based on first evaluation data. The evaluation results indicate whether the estimation results of the learning model for the first evaluation image are correct or incorrect. For example, the controller 24 inputs the data of the first evaluation image into the learning model and acquires estimation results of the learning model. The controller 24 generates and acquires evaluation results by comparing the acquired estimation results with correct data corresponding to the first evaluation image.

Based on the evaluation results, the controller 24 identifies features of the image that are likely to result in estimation results of the learning model being incorrect. In this embodiment, based on the evaluation results, the controller 24 identifies the features of the image by acquiring feature information indicating the features of the image that are likely to result in estimation results of the learning model being incorrect. Based on the evaluation results, the controller 24 may acquire, as feature information, at least any of the parameters set for objects that were incorrect and the environment of the objects that were incorrect, among the parameters set when generating the first evaluation image.

For example, the controller 24 inputs data of the first evaluation image 30 as illustrated in FIG. 4 into the learning model. The controller 24 acquires, as estimation results from the learning model, an estimation result that the object corresponding to the object image 30a is bread, an estimation result that the object corresponding to object image 30b is cheese, and an estimation result that the object corresponding to object image 30c is chocolate. In this case, the controller 24 acquires, as evaluation results, an evaluation result that the estimation result for the object image 30a is incorrect, an evaluation result that the estimation result for the object image 30b is incorrect, and an evaluation result that the estimation result for the object image 30c is correct. The controller 24 acquires, as feature information, the parameters set for the objects that were incorrect, i.e., the overlapping ratio of 40% that was set for the rice ball and butter. The controller 24 acquires the parameters set for the environment of the objects that were incorrect, i.e., setting of the luminance of illumination light to hard. This means that for an image containing a rice ball and butter with the overlapping ratio set to 40% and the luminance of illumination light set to hard, the estimation results from the learning model for the rice ball and butter are likely to be incorrect.

When the controller 24 acquires the feature information, the controller 24 may generate a signal representing the feature information. The controller 24 may transmit the generated signal to the display device 13 using the communication unit 21 and display the feature information on the display device 13. The controller 24 may display the feature information as text on the display device 13. For example, the controller 24 displays the feature information on the display device 13 in the form of the following text: "In images where the luminance of illumination light is hard and the overlapping ratio between a rice ball and butter is 40% or higher, the estimation results of the learning model for a rice ball and butter are likely to be incorrect.". By displaying the feature information on the display device 13, the operator of the information processing device 20 is able to understand the weaknesses of the learning model in terms of object recognition. Understanding the weaknesses of the learning model in terms of object recognition allows the operator to prepare suitable learning data for the learning model.

Upon acquiring feature information, the controller 24 may generate first learning data. The first learning data is data for training the learning model in order to eliminate the weaknesses of the learning model in terms of object recognition. The first learning data includes data of at least one first learning image and correct answer data corresponding to the first learning image. The correct answer data is, for example, data indicating what product an object in the first learning image is in the store. The first learning data may include data of multiple first learning images and correct answer data respectively corresponding to the first learning images.

The controller 24 may generate at least one first learning image for the first learning data based on the feature information. The controller 24 may generate multiple first learning images for the first learning data. When the controller 24 acquires parameters as feature information, the controller 24 may generate a first learning image using an object image corresponding to an object that was incorrect and the acquired parameters. For example, let us assume that the controller 24 acquires, as feature information, an overlapping ratio of 40% set for a rice ball and butter and setting of the luminance of illumination light to hard. In this case, the controller 24 generates the first learning image by adjusting the image so that the overlapping ratio of the object images 30a and 30b as illustrated in FIG. 4 is 40% and the luminance of illumination light is hard. In the same way as or in a similar way to the generation of the first evaluation image, the controller 24 may generate the first learning image by using a cut-and-paste method on existing images.

The controller 24 may train the learning model using the generated first learning data. In this way, weaknesses of the learning model in terms of object recognition can be eliminated.

[Learning Processing]

The controller 24 may execute the identification processing in parallel with predetermined learning processing. By executing the identification processing in parallel with the learning processing, points that the learning model was unable to sufficiently learn in the learning processing can be identified as weaknesses of the learning model in terms of object recognition. In the present disclosure, the learning data used in the learning processing executed in parallel with the identification processing is also referred to as "second learning data".

In this embodiment, the controller 24 executes the identification processing in parallel with the learning processing in curriculum learning. Curriculum learning is a method of learning in which the difficulty level of problems to be studied by the learning model is gradually increased from a lower level to a higher level. Hereafter, the curriculum learning processing according to this embodiment will be described.

The controller 24 repeatedly executes the learning processing in curriculum learning. The repeatedly executed learning processing includes first processing, second processing, and third processing.

The first processing is processing for setting parameters corresponding to a difficulty level as described above. In the repeatedly executed learning processing, the controller 24 sets the parameters in the latest first processing so that the difficulty level is at least one level higher than the difficulty level corresponding to the parameters set in the previous first processing. In this way, the difficulty level set as a parameter in the first processing increases in a stepwise manner as the learning processing is repeatedly performed.

As an example, let us assume that the number of objects to be detected is employed as a parameter. In addition, let us assume that the learning processing is repeated three times. In this case, in the first processing, the controller 24 sets the number of objects to be detected. For example, in the first processing in the first repetition of the learning processing, the controller 24 sets the number of objects to be detected to 1. In the first processing in the second repetition of the learning processing, the controller 24 sets the number of objects to be detected within a range from 2 to (2/M). M is the maximum number of objects to be detected that can be set within one image. In the first processing in the third repetition of the learning processing, the controller 24 sets the number of objects to be detected within a range from (2/M) to M. In this example, instead of the number of objects to be detected, the number of objects, including objects to be detected and objects not to be detected, may be employed as a parameter.

In the first processing, combinations of any number of parameters may be employed. In other words, in the first processing, the controller 24 may use combinations of any number of parameters. In this case, the controller 24 sets the parameters in the first processing so that the overall difficulty level resulting from the combination of multiple parameters increases in a stepwise manner.

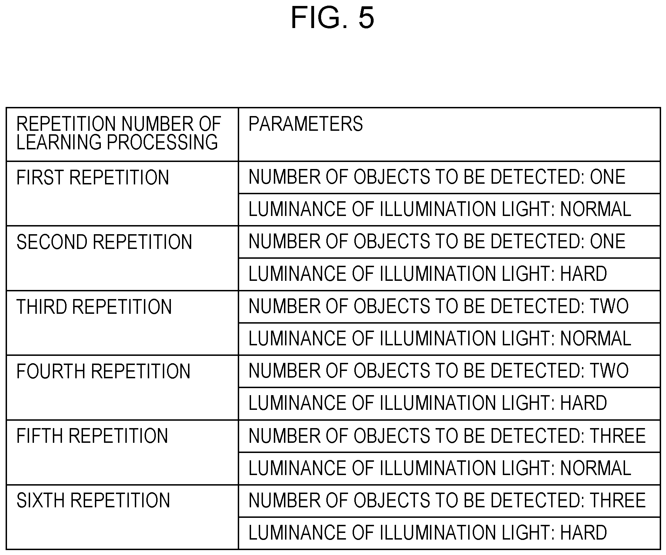

As illustrated in FIG. 5, as an example, let us assume that a combination of the number of objects to be detected and the luminance of illumination light is employed as a combination of multiple parameters. In FIG. 5, the learning processing is repeated six times. The controller 24 sets each number of objects to be detected and each luminance of illumination light in the first processing so that the overall difficulty level set based on the number of objects to be detected and the luminance of illumination light increases in a stepwise manner as the learning processing of the learning model proceeds from the first repetition to the sixth repetition. For example, in the first processing in the first repetition of the learning processing, the controller 24 sets the number of objects to be detected to one and the luminance of illumination light to normal. Setting the luminance of illumination light to normal indicates that the luminance of illumination light is within the set range. In the first processing in the second repetition of the learning processing, the controller 24 sets the number of objects to be detected to one and the luminance of illumination light to hard. As described above, setting the luminance of illumination light to hard indicates that the luminance of illumination light is higher than the set range. In the first processing in the third repetition of the learning processing, the controller 24 sets the number of objects to be detected to two and the luminance of illumination light to normal. In the first processing in the fourth repetition of the learning processing, the controller 24 sets the number of objects to be detected to two and the luminance of illumination light to hard. In the first processing in the fifth repetition of the learning processing, the controller 24 sets the number of objects to be detected to three and the luminance of illumination light to normal. In the first processing in the sixth repetition of the learning processing, the controller 24 sets the number of objects to be detected to three and the luminance of illumination light to hard.

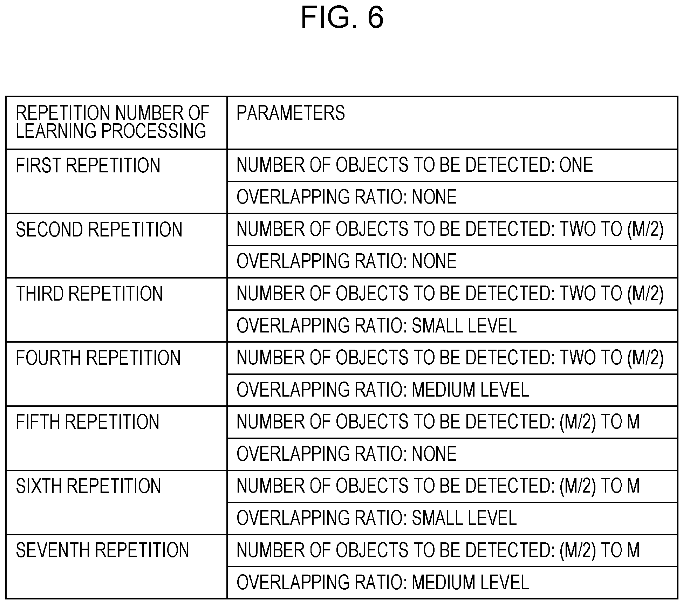

As another example, as illustrated in FIG. 6, let us assume that a combination of the number of objects to be detected and the overlapping ratio is employed as a combination of multiple parameters. In FIG. 6, the learning processing is repeated seven times. The controller 24 sets each number of objects to be detected and each overlapping ratio in the first processing so that the overall difficulty level set based on the number of objects to be detected and the overlapping ratio increases in a stepwise manner as the learning processing of the learning model proceeds from the first repetition to the seventh repetition. For example, in the first processing in the first repetition of the learning processing, the controller 24 sets the number of objects to be detected to 1 and the overlapping ratio to none. In the first processing in the second repetition of the learning processing, the controller 24 sets the number of objects to be detected within a range from 2 to (M/2) and sets the overlapping ratio to none. M is the maximum number of objects to be detected that can be set within one image. In the first processing in the third repetition of the learning processing, the controller 24 sets the number of objects to be detected within a range from 2 to (M/2) and sets the overlapping ratio to a small level. The small level overlapping ratio is the smallest level when the overlapping ratio is defined using three levels. In the first processing in the fourth repetition of the learning processing, the controller 24 sets the number of objects to be detected within a range from 2 to (M/2) and sets the overlapping ratio to a medium level. The medium level overlapping ratio is the medium level when the overlapping ratio is defined using three levels. In the first processing in the fifth repetition of the learning processing, the controller 24 sets the number of objects to be detected within a range from (M/2) to M and sets the overlapping ratio to none. In the first processing in the sixth repetition of the learning processing, the controller 24 sets the number of objects to be detected within a range from (M/2) to M and sets the overlapping ratio to a small level. In the first processing in the seventh repetition of the learning processing, the controller 24 sets the number of objects to be detected within a range from (M/2) to M and sets the overlapping ratio to a small level. In this example, instead of the number of objects to be detected, the number of objects, including objects to be detected and objects not to be detected, may be employed as a parameter. In other words, in this example, a combination of the number of objects, including objects to be detected and objects not to be detected, and the overlapping ratio may be employed as a combination of multiple parameters.

The second processing is processing for generating second learning data based on the parameters set in the first processing. The second learning data includes data of at least one second learning image and correct answer data corresponding to the second learning image. The correct answer data is, for example, data indicating what product an object in the second learning image is in the store. The second learning data may include data of multiple second learning images and correct answer data respectively corresponding to the second learning images. In the same way as or in a similar way to generation of the first evaluation image, in the second processing, the controller 24 may generate at least one second learning image based on the parameters set in the first processing. The controller 24 may generate multiple second learning images. In the second processing, the controller 24 may generate a second learning image by using a cut-and-paste method on existing images, in the same or a similar manner to the generation of the first evaluation image.

In the second processing, the controller 24 may generate a second learning image based on the parameters newly set in the latest first processing. In this way, the difficulty level of the problem to be addressed using the second learning image generated in the second processing increases in a step-wise manner as the learning processing is repeatedly executed.

The third processing is processing for training the learning model using the second learning data generated in the second processing.

Here, the controller 24 may repeat the learning processing until the estimation accuracy of the learning model satisfies a set condition. The controller 24 may acquire the estimation accuracy of the learning model used to determine whether or not the set condition is satisfied by using second evaluation data. The second evaluation data is evaluation data that is different from the first evaluation data. The second evaluation data includes data of at least one second evaluation image and correct answer data corresponding to the second evaluation image. The correct answer data is, for example, data indicating what product an object in the second evaluation image is in the store. The second evaluation data may include data of multiple second evaluation images and correct answer data respectively corresponding to the second evaluation images. The second evaluation image may be an image generated by actually capturing an image. By using an image generated by actually capturing an image as second evaluation data, the estimation accuracy of the learning model can be measured more accurately. The controller 24 may acquire mean Average Precision (mAP) as the estimation accuracy of the learning model.

The set condition may be a first condition that a first precision ratio exceeds a first threshold. The first precision ratio may be the estimation accuracy of the learning model calculated based on the estimation result having the highest degree of confidence. The first precision ratio may be mAP@1, described below. The first threshold may be set based on the estimation accuracy of the learning model that is the focus of the information processing system 3.

The set condition may be a second condition that a second precision ratio exceeds a second threshold. The second precision ratio may be the estimation accuracy of the learning model calculated based on estimation results having the first and second highest degrees of confidence. The second precision ratio may be mAP@2, described below. The second threshold may be set based on the estimation accuracy of the learning model required for operation of the information processing device 20. The second threshold is 100%, for example.

For example, the controller 24 calculates mAP@1 and mAP@2 using the following Equation (1). mAP@n is the average value of AP@n. AP@n is the average value of the percentage of estimation results that were correct out of the estimation results having degrees of confidence up to the nth degree of confidence (n is an integer greater than or equal to 1). If q is the set of pairs of estimation results and correct answers, AP@n is described as "AP(q)@n". The order of degree of confidence is counted from highest to lowest. The controller 24 calculates AP@n using the following Equation (2).

[Math 1]

$$\mathrm{mAP@n} = \frac{\sum_{q=1}^{Q} \mathrm{AP(q)@n}}{Q} \qquad \text{Equation (1)}$$

[Math 2]

$$\mathrm{AP@n} = \frac{1}{\mathrm{GTP}} \sum_{k}^{n} \mathrm{P@k} \times \mathrm{rel@k} \qquad \text{Equation (2)}$$

In Equation (1), a number of problems Q is the number of problems to be addressed using the second learning image.

In Equation (2), a number of problems GTP is the number of problems that were correct in the estimation results having degrees of confidence up to the nth degree of confidence. A correct answer ratio P@k is the number of estimation results that were correct out of the estimation results having the kth degree of confidence assigned thereto with respect to the number of problems corresponding to the estimation results that were assigned degrees of confidence up to the kth degree of confidence. A coefficient rel@k is 1 if an estimation result assigned with the kth degree of confidence is correct. The coefficient rel@k is 0 if an estimation result assigned with the kth degree of confidence is incorrect.

The set condition is not limited to the first condition and the second condition. The set condition may be that either of the first and second conditions is satisfied, or that both the first and second conditions are satisfied.

(System Operation)

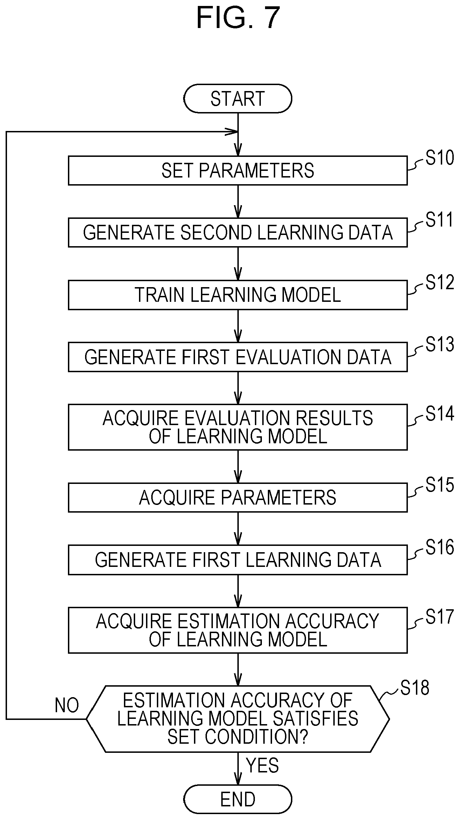

FIG. 7 is a flowchart illustrating operation of learning support processing executed by the information processing system 3 illustrated in FIG. 1. This operation corresponds to an example of an information processing method according to this embodiment. The controller 24 may execute the learning support processing at any suitable timing. For example, the controller 24 may execute the learning support processing before the operation of the information processing device 20 or after the operation of the information processing device 20.

The controller 24 sets the parameters (Step S10). The processing of Step S10 corresponds to the first processing. If the processing of Step S10 is the first time the processing has been performed, the controller 24 sets the parameters to initial values. The initial values of the parameters may be based on the amount of learning data that the learning model has already learned. If the processing of Step S10 has already been performed, the controller 24 sets the parameters so that the difficulty level is at least one level higher than the difficulty level corresponding to the parameters set the previous time the processing of Step S10 was performed.

The controller 24 generates second learning data based on the parameters set in the processing of Step S10 (Step S11). The processing of Step S11 corresponds to the second processing. The controller 24 generates a second learning image based on the parameters set in the processing of Step S10.

The controller 24 trains the learning model using the second learning data generated in the processing of Step S11 (Step S12). The processing of Step S12 corresponds to the third processing. If the processing in Step S16, described below, has already been performed, in the processing of Step S12, the controller 24 trains the learning model using the first learning data generated in the processing of Step S16 and the second learning data generated in the processing of Step S11.

The controller 24 generates first evaluation data based on the parameters set in the processing of Step S10 (Step S13). The controller 24 generates a first evaluation image based on the parameters set in the processing of Step S10.

The controller 24 acquires evaluation results of the learning model based on the first evaluation data generated in the processing of Step S13 (Step S14).

Based on the evaluation results acquired in the processing of Step S14, the controller 24 acquires at least any of the parameters set for an object for which the estimation result of the learning model was incorrect and the parameters set for the environment of that object (Step S15). In other words, the controller 24 acquires at least any of the multiple parameters set in the processing of Step S10 for an object for which the estimation result of the learning model was incorrect and for the environment of that object.

The controller 24 generates first learning data based on the parameters acquired in the processing of Step S15 (Step S16). The controller 24 generates a first learning image based on the parameters acquired in the processing of Step S 15. The first learning data generated in the processing of Step S16 is used to train the learning model in the next repetition of the processing of Step S12.

Using second evaluation data, the controller 24 acquires the estimation accuracy of the learning model used to determine whether or not a set condition is satisfied (Step S17).

The controller 24 determines whether or not the estimation accuracy of the learning model acquired in the processing of Step S17 satisfies the set condition (Step S18). When the controller 24 determines that the estimation accuracy of the learning model satisfies the set condition (Step S18: YES), the controller 24 terminates the learning support processing. On the other hand, when the controller 24 determines that the estimation accuracy of the learning model does not satisfy the set condition (Step S8: NO), the controller 24 returns to the processing of Step S10.

Here, in the processing of Step S10, the controller 24 may set the parameters so that the difficulty level is multiple levels higher than the difficulty level corresponding to the parameters set in the previous processing of Step S10. In this case, in the processing of Step S15, the controller 24 may identify the type of at least any of the parameters set for the object for which the estimation result of the learning model was incorrect and the parameters set for the environment of that object. In the processing of Step S16, the controller 24 may specify a parameter range, which is the range from the value set in the processing of the previous Step S10 to the value set in the processing of the latest Step S10, for a parameter whose type has been identified. Furthermore, in the processing of Step S16, the controller 24 may generate the first learning image based on at least part of the parameter range. For example, let us assume that the overlapping ratio is employed as a parameter. In addition, let us assume that the controller 24 set the overlapping ratio to 40% in the previous processing of Step S10 and sets the overlapping ratio to 50% in the latest processing of Step S10. Furthermore, in the processing of Step S 15, let us assume that the controller 24 has identified the overlapping ratio as the type of parameter set for an object for which the estimation result of the learning model was incorrect. In this case, in the processing of Step S16, the controller 24 identifies a range of 40% to 50% for the overlapping ratio as the parameter range. In addition, the controller 26 generates the first learning image based on at least part of an overlapping ratio range of 40% to 50%.

Thus, in information processing device 20, the controller 24 identifies, based on the evaluation results, the features of an image that are likely to result in estimation results of the learning model being incorrect. In this way, weaknesses of the learning model in terms of object recognition can be identified. By identifying the weaknesses of the learning model in object recognition, learning data can be efficiently generated to eliminate the weaknesses of the learning model in object recognition. Therefore, the learning model can be efficiently trained.

Let us assume a case where the weaknesses of the learning model in object recognition cannot be identified. In this case, the weaknesses of the learning model in object recognition need to be eliminated by training the learning model with learning data containing a large amount of learning image data. However, using a large number of learning images may result in an increase in the amount of annotation and other work.

In contrast, in the information processing device 20 according to this embodiment, the controller 24 can identify weaknesses of the learning model in terms of object recognition by identifying features of an image that are likely to result in estimation results of the learning model being incorrect, as described above. In this way, the weaknesses of the learning model in object recognition can be eliminated without training the learning model with learning data containing a large amount of learning image data. Therefore, in this embodiment, the likelihood of there being an increase in annotation and other work is reduced.

Therefore, according to this embodiment, an improved technology that supports learning can be provided.

In addition, the controller 24 may generate first learning data based on feature information. In this way, first learning data for eliminating weaknesses of the learning model in object recognition can be automatically generated. The controller 24 may train the learning model using the first learning data. In this way, weaknesses of the learning model in object recognition can be automatically eliminated.

The controller 24 may set parameters and generate a first evaluation image based on the set parameters. The controller 24 may acquire, as feature information, at least any of the parameters set for an object for which the estimation result of the learning model was incorrect and the parameters set for the environment of that object. By setting parameters and generating a first evaluation image based on the set parameters, the difficulty level of the problem to be addressed using the first evaluation image can be appropriately adjusted. By appropriately adjusting the difficulty level of the problem to be addressed using the first evaluation image, the weaknesses of the learning model in object recognition can be identified with greater accuracy.

The controller 24 may execute predetermined learning processing in parallel with identification processing. In this case, the controller 24 may generate a first evaluation image based on parameters set in the first processing of the learning processing. In other words, in the information processing method according to this embodiment, generating a first evaluation image may include generating a first evaluation image based on parameters set in the first processing. For example, in the processing of Step S13, the controller 24 generates a first evaluation image based on parameters set in Step S10 as the first processing. By generating a first evaluation image based on parameters set in the first processing, points that the learning model was unable to sufficiently learn using the second learning data can be identified as weaknesses of the learning model in object recognition in the third processing. For example, the controller 24 can acquire, as parameters, in the processing in Step S15 points that the learning model was unable to sufficiently learn using the second learning data in the processing in Step S12 as the third processing.

The controller 24 may repeatedly execute the learning processing. In the repeatedly executed learning processing, the controller 24 may set the parameters in the latest first processing so that the difficulty level is at least one level higher than the difficulty level corresponding to the parameters set in the previous first processing. For example, in the latest processing of Step S10, the controller 24 sets the parameters so that the difficulty level is at least one level higher than the difficulty level corresponding to the parameters set in the previous processing of Step S10. In this way, the difficulty level of the problem to be addressed using a second learning image increases in a step-wise manner as the learning processing is repeatedly executed. For example, as the processing of Steps S10 to S18 is repeated, the difficulty level corresponding to the parameters set in Step S10 increases in a stepwise manner, and the difficulty level of the problem to be addressed using the second learning image generated in the processing of Step S11 also increases in a stepwise manner.

The controller 24 may generate a first evaluation image based on the parameters newly set in the latest first processing. In other words, in the information processing method according to this embodiment, generating a first evaluation image may include generating a first evaluation image based on parameters newly set in the latest first processing. For example, in the processing of Step 13, the controller 24 generates a first evaluation image based on the parameters newly set in the processing of Step S10 as the latest first processing. In this way, the first evaluation image is generated based on the same parameters as the second learning image in the repeatedly executed learning processing. For example, the first evaluation image generated in the processing of Step S13 is generated based on the parameters newly set in the latest processing of Step S10, the same as the second learning image generated in the processing of Step S11. By generating the first evaluation image based on the same parameters as the second learning image, the difficulty level of the problem to be addressed using the first evaluation image becomes the same as the difficulty level of the problem to be addressed with the second learning image, even though the difficulty level of the problem to be addressed using the second learning image increases step by step as the learning processing is repeatedly performed. In this way, points that the learning model was unable to sufficiently learn using the second learning data in the processing of Step S12 can be acquired more accurately as parameters in the processing of Step S15.

The controller 24 may train the learning model with the first learning data in the repeatedly executed learning processing. In other words, the information processing method according to this embodiment may include training the learning model with first learning data in the repeatedly executed learning processing. For example, when the processing of Steps S10 to S18 is repeatedly executed, the controller 24 trains the learning model in the processing of Step S12 using first learning data generated in the processing of Step S16.

Among multiple newly set parameters, the controller 24 may acquire, as feature information, at least any of the parameters set for an object for which the estimation result of the learning model was incorrect and the parameters set for the environment of that object. In other words, in the information processing method according to this embodiment, acquiring the parameters as feature information may include acquiring the parameters set for an object for which the estimation result of the learning model was incorrect out of multiple newly set parameters. In addition, in the information processing method according to this embodiment, acquiring the parameters as feature information may include acquiring the parameters set for the environment of an object for which the estimation result of the learning model was incorrect out of the multiple newly set parameters. For example, in the processing Step S15, the controller 24 acquires the parameters and so on set for an object for which the estimation result of the learning model was incorrect out of the multiple parameters set in the latest processing of Step S10.

In the repeatedly executed learning processing, the controller 24 may set the parameters in the latest first processing so that the difficulty level is multiple levels higher than the difficulty level corresponding to the parameters set in the previous first processing. In this case, the controller 24 may identify the type of at least any of the parameters set for the object for which the estimation result of the learning model was incorrect and the parameters set for the environment of that object. The controller 24 may identify a parameter range, which is the range from the value set in the previous first processing to the value set in the latest first processing for a parameter whose type has been identified. The controller 24 may generate a first learning image based on at least part of the parameter range. For example, as described above, in the latest processing of Step S10, the controller 24 may set the parameters so that the difficulty level is multiple levels higher than the difficulty level corresponding to the parameters set in the previous processing of Step S 10. As described above, in the processing of Step S 15, the controller 24 may identify the type of parameter and so on set for an object for which the estimation result of the learning model was incorrect. As described above, in the processing of Step S 16, the controller 24 may identify a parameter range and generate the first learning image based on at least part of the parameter range. By setting parameters in such a way that the difficulty level is multiple levels higher, the time required for curriculum learning can be reduced. Even if the parameters are set so that the difficulty level is multiple levels higher, the first learning image can be generated based on the parameter in at least part of the identified parameter range. In this way, points that the learning model was unable to sufficiently learn in the curriculum learning can be compensated for using the first learning data.

The controller 24 may repeatedly perform the learning processing until the estimation accuracy of the learning model satisfies a set condition. In this way, the learning processing can be completed at an appropriate timing.

The controller 24 may generate the first evaluation image by using a cut-and-paste method on existing images. In other words, in the information processing method according to this embodiment, generating the first evaluation image may include using a cut-and-paste method on existing images. By generating a first evaluation image from existing images, the time and cost for identifying weaknesses of the learning model in object recognition can be reduced compared to a case where a first evaluation image is generated by actually capturing an image. In addition, by generating a first evaluation image from existing images, a large number of first evaluation images can be more easily generated compared to a case where the first evaluation images are generated by actually capturing images. By using more first evaluation images, weaknesses of the learning model in object recognition can be identified with greater accuracy.

The controller 24 may generate the first learning image by using a cut-and-paste method on existing images. In other words, in the information processing method according to this embodiment, generating the first learning image may include using a cut-and-paste method on existing images. By generating the first learning image from existing images, the time and cost of generating the first learning data can be reduced. By reducing the time and cost incurred generating the first learning data, the time and cost incurred in eliminating weaknesses of the learning model in object recognition can be reduced.

The controller 24 may generate the second learning image by using a cut-and-paste method on existing images. In other words, in the information processing method according to this embodiment, generating the second learning image may include using a cut-and-paste method on existing images. By generating the second learning image from existing images, the time and cost incurred in curriculum learning using the second learning data can be reduced compared to generating the second learning image by actually capturing an image. In addition, by generating the second evaluation images from existing images, a large number of second evaluation images can be more easily generated compared with a case where the second evaluation images are generated by actually capturing images. In this embodiment, weaknesses of the learning model in object recognition can be identified even if curriculum learning is performed with second learning data including data of second learning images generated from existing images.

Here, in a POS system, the learning model needs to learn a new product each time a new product is introduced. Therefore, even after the information processing system 3 has been put into operation, if a new product is introduced, the learning model needs to learn the new product. However, depending on the configuration of the information processing system, the learning model may have difficulty in learning new products after the information processing system has been put into operation. In order for the learning model to learn new products, many learning images and evaluation images that include the new products may need to be prepared.

In this embodiment, for example, if one image generated by capturing an image of a new product is prepared, the controller 24 can easily generate a first evaluation image, a first learning image, and a second learning image by using a cut-and-paste method on existing images including the image of the new product. In other words, many first evaluation images, first learning images, and second learning images, including new products, can be easily prepared. If a first evaluation image, a first learning image, and a second learning image containing an image of a new product are prepared, the controller 24 can execute the learning support processing at any suitable timing. Thus, new products can be learned by the learning model even after the information processing system 3 has been put into operation.

The operator may also want the learning model to learn images that are appropriate for the usage patterns of the store in which the information processing system 3 is installed. In this case, in this embodiment, the operator can cause the information processing device 20 to generate images in accordance with the usage patterns of the store. In the information processing device 20, the controller 24 can make the learning model learn images in accordance with the usage patterns of the store through the above-described processing.

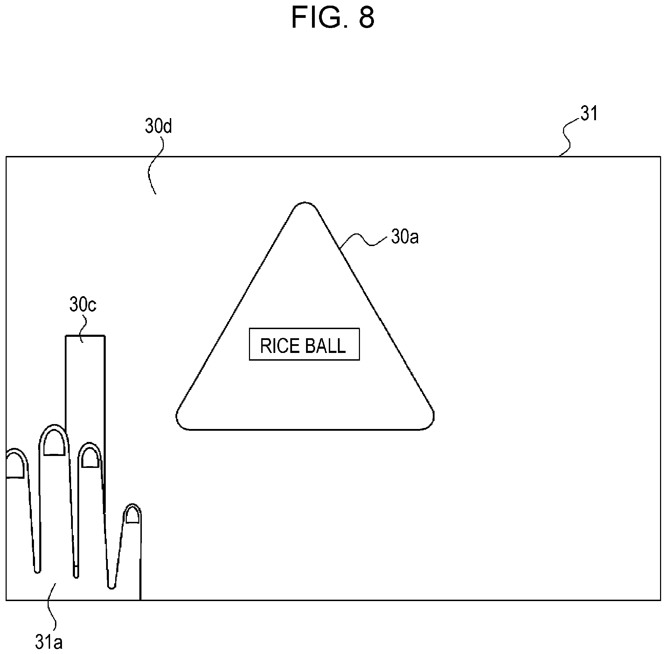

For example, in a store, let us suppose that there are often cases where a customer's hand, which is an object that is not to be detected, appears in the image. Let us assume that the operator wants the learning model to learn an image containing a hand as an image that corresponds to a usage pattern of the store. In this case, the operator can cause the information processing device 20 to generate a first evaluation image 31 as illustrated in FIG. 8. The first evaluation image 31 includes an object image 30a corresponding to a rice ball, an object image 30c corresponding to chocolate, an object image 31a corresponding to a hand, and a background image 30d. When generating the first evaluation image 31, the operator causes the image-capturing unit 12 to capture and generate an image containing the object image 31a. The controller 24 generates the first evaluation image 31 by using a cut-and-paste method on an image including the object image 31a captured and generated by the image-capturing unit 12. In the same way as or in a similar way to the generation of the first evaluation image 31, the controller 24 can generate a first learning image and a second learning image including the object image 31a. The controller 24 can perform curriculum learning and identification processing using these images. In this way, the learning model can be trained with images that are appropriate to the usage patterns of the store in which the information processing system 3 is installed.

Embodiments of the present disclosure have been described based on the drawings and examples, but note that a variety of variations and amendments may be easily made by one skilled in the art based on the present disclosure. Therefore, note that such variations and amendments are included within the scope of the present disclosure. For example, the functions and so forth included in each component or step can be rearranged in a logically consistent manner, and a plurality of components or steps can be combined into a single component or step or a single component or step can be divided into a plurality of components or steps.

For example, in this embodiment, in the processing of Step S12, the controller 24 was described as training the learning model using the first learning data generated in the processing of Step S16 and the second learning data generated in the processing of Step S11. However, the processing of training the learning model using the first learning data and the processing of training the learning model using the second learning data may be executed as separate processing operations. For example, the controller 24 may train the learning model using the first learning data generated in the processing of Step S16 immediately after executing the processing of Step S 16.

For example, the information processing method according to this embodiment has been described as being executed by the information processing device 20. However, the device that executes the information processing method according to this embodiment is not limited to the information processing device 20. The information processing method may be executed by any suitable device. For example, the information processing device according to this embodiment is executed by an image generating device, a learning support device, or the server 4. In addition, the information processing method according to this embodiment may be executed as an image generating method or a learning support method.

For example, an embodiment in which a general-purpose computer functions as the information processing device 20 according to this embodiment is also possible. Specifically, a program describing processing content that realizes each function of the information processing device 20 according to this embodiment is stored in the memory of a general-purpose computer, and the program is read out and executed by a processor of the general-purpose computer. Therefore, the configuration according to this embodiment can also be realized as a program executable by a processor or a non-transitory computer-readable medium storing this program.

In the present disclosure, "first", "second," and so on are identifiers used to distinguish between such configurations. Regarding the configurations, "first", "second", and so on used to distinguish between the configurations in the present disclosure may be exchanged with each other. For example, identifiers "first" and "second" can be exchanged between the first evaluation image and the second evaluation image. Exchanging of the identifiers takes place simultaneously. Even after exchanging the identifiers, the configurations are distinguishable from each other. The identifiers may be deleted. The configurations that have had their identifiers deleted are distinguishable from each other by symbols. Just the use of identifiers such as "first" and "second" in this disclosure is not to be used as a basis for interpreting the order of such configurations or the existence of identifiers with smaller numbers.

REFERENCE SIGNS

| | |
|---|---|
| 1 | payment system |
| 2 | network |
| 3 | information processing system |
| 4 | server |
| 10 | placement table |
| 10s | upper surface |
| 11 | support column |
| 12 | image-capturing unit |
| 13 | display device |
| 20 | information processing device |
| 21 | communication unit |
| 22 | input unit |
| 23 | storage |
| 24 | controller |
| 30 | first evaluation image |
| 30a, 30b, 30c, 31a | object image |
| 30d | background image |
| 30a1, 30b1 | detection frame |

**Claims**

1. An information processing method comprising:

   acquiring an evaluation result indicating whether an estimation result of a learning model for a first evaluation image is correct or incorrect based on first evaluation data including data of at least one first evaluation image and correct answer data for the first evaluation image; and
   executing identification processing in which a feature of an image that is likely to cause the estimation result of the learning model to be incorrect is identified based on the evaluation result.

2. The information processing method according to claim 1, further comprising:
   generating first learning data including data of at least one first learning image and correct answer data for the first learning image, wherein the first learning image is generated based on feature information indicating a feature of the image.

3. The information processing method according to claim 2, further comprising:
   training the learning model using the first learning data.

4. The information processing method according to claim 3, further comprising:

   setting parameters corresponding to a difficulty level of estimating an object in an image and generating the first evaluation image based on the set parameters,
   wherein the identification processing includes processing of acquiring, as the feature information, at least any one of the parameters set for an object for which the estimation result of the learning model was incorrect and the parameters set for an environment of the object for which the estimation result was incorrect.

5. The information processing method according to claim 4, further comprising: executing predetermined learning processing and the identification processing in parallel,

wherein the learning processing includes first processing of setting the parameters, second processing of generating at least one second learning image based on the set parameters, and third processing of training the learning model using second learning data including data of the at least one second learning image and correct answer data for the second learning image, and

generating the first evaluation image includes generating the first evaluation image based on the parameters set in the first processing.

6. The information processing method according to claim 5, further comprising:

repeatedly executing the learning processing,

wherein the repeated executing of the learning processing includes, in a latest repetition of the first processing, setting the parameters with the difficulty level at least one level higher than the difficulty level corresponding to the parameters set in a previous repetition of the first processing, and

generating the first evaluation image includes generating the first evaluation image based on the parameters newly set in the latest repetition of the first processing.

7. The information processing method according to claim 6,

wherein the repeated executing of the learning processing further includes, in the latest repetition of the first processing, setting the parameters with the difficulty level multiple levels higher than the difficulty level corresponding to the parameters set in the previous repetition of the first processing,

identifying a type of at least any one of the parameters set for the object for which the estimation result of the learning model was incorrect and the parameters set for the environment of the object for which the estimation result was incorrect,

acquiring a parameter range of a parameter whose type has been identified, the parameter range being a range from a value set in the previous repetition of the first processing to a value set in the latest repetition of the first processing; and

generating the first learning image based on at least part of the parameter range.

8. The information processing method according to claim 6 or 7, further comprising:
repeatedly executing the learning processing until an estimation accuracy of the learning model satisfies a set condition.

9. The information processing method according to any one of claims 5 to 8, wherein generating the first evaluation image, the first learning image, and the second learning image includes using a cut-and-paste method on an existing image.

10. A program for causing a computer to execute:

acquiring an evaluation result indicating whether an estimation result of a learning model for a first evaluation image is correct or incorrect based on first evaluation data including data of at least one first evaluation image and correct answer data for the first evaluation image; and

executing identification processing in which a feature of an image that is likely to cause the estimation result of the learning model to be incorrect is identified based on the evaluation result.

11. An information processing device comprising:

a controller configured to acquire an evaluation result indicating whether an estimation result of a learning model for a first evaluation image is correct or incorrect based on first evaluation data including data of at least one first evaluation image and correct answer data for the first evaluation image,

wherein the controller executes identification processing in which a feature of an image that is likely to cause the estimation result of the learning model to be incorrect is identified based on the evaluation result.

# FIG. 1

# FIG. 2

# FIG. 3

INFORMATION PROCESSING DEVICE 20

COMMUNICATION UNIT 21

STORAGE 23

INPUT UNIT 22

CONTROLLER 24

# FIG. 4

# FIG. 5

| REPETITION NUMBER OF LEARNING PROCESSING | PARAMETERS |
|---|---|
| FIRST REPETITION | NUMBER OF OBJECTS TO BE DETECTED: ONE |
| | LUMINANCE OF ILLUMINATION LIGHT: NORMAL |
| SECOND REPETITION | NUMBER OF OBJECTS TO BE DETECTED: ONE |
| | LUMINANCE OF ILLUMINATION LIGHT: HARD |
| THIRD REPETITION | NUMBER OF OBJECTS TO BE DETECTED: TWO |
| | LUMINANCE OF ILLUMINATION LIGHT: NORMAL |
| FOURTH REPETITION | NUMBER OF OBJECTS TO BE DETECTED: TWO |
| | LUMINANCE OF ILLUMINATION LIGHT: HARD |
| FIFTH REPETITION | NUMBER OF OBJECTS TO BE DETECTED: THREE |
| | LUMINANCE OF ILLUMINATION LIGHT: NORMAL |
| SIXTH REPETITION | NUMBER OF OBJECTS TO BE DETECTED: THREE |
| | LUMINANCE OF ILLUMINATION LIGHT: HARD |

# FIG. 6

| REPETITION NUMBER OF LEARNING PROCESSING | PARAMETERS |
|---|---|
| FIRST REPETITION | NUMBER OF OBJECTS TO BE DETECTED: ONE |
| | OVERLAPPING RATIO: NONE |
| SECOND REPETITION | NUMBER OF OBJECTS TO BE DETECTED: TWO TO (M/2) |
| | OVERLAPPING RATIO: NONE |
| THIRD REPETITION | NUMBER OF OBJECTS TO BE DETECTED: TWO TO (M/2) |
| | OVERLAPPING RATIO: SMALL LEVEL |
| FOURTH REPETITION | NUMBER OF OBJECTS TO BE DETECTED: TWO TO (M/2) |
| | OVERLAPPING RATIO: MEDIUM LEVEL |
| FIFTH REPETITION | NUMBER OF OBJECTS TO BE DETECTED: (M/2) TO M |
| | OVERLAPPING RATIO: NONE |
| SIXTH REPETITION | NUMBER OF OBJECTS TO BE DETECTED: (M/2) TO M |
| | OVERLAPPING RATIO: SMALL LEVEL |
| SEVENTH REPETITION | NUMBER OF OBJECTS TO BE DETECTED: (M/2) TO M |
| | OVERLAPPING RATIO: MEDIUM LEVEL |

# FIG. 7

```
                    START

                    ↓

         SET PARAMETERS                    S10

                    ↓

    GENERATE SECOND LEARNING DATA          S11

                    ↓

        TRAIN LEARNING MODEL               S12

                    ↓

     GENERATE FIRST EVALUATION DATA        S13

                    ↓

      ACQUIRE EVALUATION RESULTS           S14
          OF LEARNING MODEL

                    ↓

         ACQUIRE PARAMETERS                S15

                    ↓

      GENERATE FIRST LEARNING DATA         S16

                    ↓

    ACQUIRE ESTIMATION ACCURACY            S17
         OF LEARNING MODEL

                    ↓
                                           S18
NO    ESTIMATION ACCURACY OF
      LEARNING MODEL SATISFIES
          SET CONDITION?

                    ↓ YES

                    END
```

# FIG. 8

30d

31

30a

30c

RICE BALL

31a

| | | |
|---|---|---|
| **INTERNATIONAL SEARCH REPORT** | | International application No.<br>**PCT/JP2022/020593** |

**A.    CLASSIFICATION OF SUBJECT MATTER**

*G06T 7/00*(2017.01)i; *G06T 1/00*(2006.01)i; *G06N 20/00*(2019.01)i
FI:    G06T7/00 350B; G06T1/00 500A; G06N20/00 130

According to International Patent Classification (IPC) or to both national classification and IPC

**B.    FIELDS SEARCHED**

Minimum documentation searched (classification system followed by classification symbols)

G06T7/00; G06T1/00; G06N20/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2016-099668 A (CANON INC.) 30 May 2016 (2016-05-30)<br>    paragraphs [0038]-[0041] | 1, 2, 10, 11 |
| A | paragraphs [0038]-[0041] | 3-9 |
| A | JP 2020-080003 A (ISHIDA CO., LTD.) 28 May 2020 (2020-05-28)<br>    entire text, all drawings | 1-11 |
| A | JP 2018-088223 A (CANON MARKETING JAPAN INC.) 07 June 2018 (2018-06-07)<br>    entire text, all drawings | 1-11 |

☐ Further documents are listed in the continuation of Box C.        ☑ See patent family annex.

| | |
|---|---|
| *      Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **25 July 2022** | **02 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/020593**

| Patent document cited in search report | | | Publication date (day/month/year) | Patent family member(s) | | | Publication date (day/month/year) |
|---|---|---|---|---|---|---|---|
| JP | 2016-099668 | A | 30 May 2016 | (Family: none) | | | |
| JP | 2020-080003 | A | 28 May 2020 | US entire text, all drawings EP CN | 2020/0151511 3651067 111178379 | A1 A1 A | |
| JP | 2018-088223 | A | 07 June 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021084954 A
- JP 2020080003 A
- JP 2018088223 A